# EUROPEAN PATENT APPLICATION

(11) **EP 3 511 572 A1**
(43) Date of publication of application: **17.07.2019**
(21) Application number: 17867799.3
(22) Date of filing: 06.10.2017
(51) Int. Cl.: F04B 39/10, F04C 29/12

(54) **COMPRESSOR**

(30) Priority: 02.11.2016 JP 2016215180
(71) Applicant: Daikin Industries, Ltd., Osaka-shi, Osaka 530-8323 (JP)
(72) Inventor: INADA Yukihiro, Osaka-shi Osaka 530-8323 (JP); MASUDA Masanori, Osaka-shi Osaka 530-8323 (JP); ENDOU Chihiro, Osaka-shi Osaka 530-8323 (JP)
(74) Representative: Goddar, Heinz J.
(86) International application number: PCT/JP2017/036514
(87) International publication number: WO 2018/083944

(57) **Abstract**

A valve retainer (90) is provided between a leaf spring valve (75) and an outflow opening surface (62) of an introduction port (61). A valve end portion (84) of the leaf spring valve (75) in an open state comes into contact with the valve retainer (90). The valve retainer (90) has a shape which exposes part of the valve end portion (84) in the open state to the outflow opening surface (62) of the introduction port (61).

## Description

### TECHNICAL FIELD

The present invention relates to a compressor.

### BACKGROUND ART

Compressors which are configured to compress a fluid in a compression chamber have been known. A compressor of this type performs an injection operation in which an intermediate-pressure fluid (refrigerant) is supplied to the compression chamber.

For example, a compressor disclosed in Patent Document 1 has an introduction port connected to a compression chamber, and a leaf spring valve for opening and closing the introduction port. When a pressure difference between an intermediate-pressure of a refrigerant and an internal pressure of the compression chamber becomes large, a neck portion of the leaf spring valve is elastically deformed in a downstream direction by the pressure of the refrigerant. As a result, the leaf spring valve enters an open state where the introduction port is opened by a valve end portion of the leaf spring valve. The intermediate-pressure refrigerant is then supplied to the compression chamber through the introduction port.

### CITATION LIST

### PATENT DOCUMENTS

Patent Document 1: Japanese Unexamined Patent Publication No. 2013-209954

### SUMMARY OF THE INVENTION

### TECHNICAL PROBLEM

In the injection operation described above, when the internal pressure of the compression chamber becomes higher than an internal pressure of a primary passage of the introduction port, the leaf spring valve returns to its original state to close the introduction port. In this manner, backflow of the refrigerant from the compression chamber to the introduction port can be prevented. However, a flow path which allows the refrigerant to flow back remains during a time taken by the leaf spring valve in the open state to return to its original position. Therefore, if the compressed refrigerant flows back into the introduction port during this time, the compression efficiency is reduced.

In view of the foregoing background, it is therefore an object of the present invention to reduce an amount of a fluid which flows backward during a time taken by a leaf spring valve to change from an open state to a closed state.

### SOLUTION TO THE PROBLEM

A first aspect of the present invention is directed to a compressor including: an electric motor (31); an injection mechanism (60) including an introduction port (61) and a check valve mechanism (70), the introduction port (61) opening in the compression chamber (45), the check valve mechanism (70) opening and closing the introduction port (61), the injection mechanism (60) configured to introduce the fluid having an intermediate pressure from the introduction port (61) to the compression chamber (45), wherein the check valve mechanism (70) includes a leaf spring valve (75) which has a frame portion (83) fitting an inner peripheral wall (63) of the introduction port (61), a valve end portion (84) located inside the frame portion (83), and a neck portion (85) connecting the valve end portion (84) and the frame portion (83) together, the leaf spring valve (75) configured to open the introduction port (61) when elastically deformed, and a valve retainer (90) which is disposed between the leaf spring valve (75) and an outflow opening surface (62) of the introduction port (61), and with which the valve end portion (84) of the leaf spring valve (75) in an open state comes into contact, and the valve retainer (90) has a shape which exposes part of the valve end portion (84) in the open state to the outflow opening surface (62) of the introduction port (61).

According to the first aspect, when an internal pressure upstream of the leaf spring valve (75) in the introduction port (61) becomes higher than an internal pressure of the compression chamber (45), the valve end portion (84) is pushed toward the compression chamber (45) by a pressure difference between these internal pressures. Consequently, the neck portion (85) continuing to the frame portion (83) is elastically deformed, and the valve end portion (84) comes into contact with the valve retainer (90). As a result, the introduction port (61) is opened.

On the other hand, when the internal pressure of the compression chamber (45) becomes higher than the internal pressure upstream of the leaf spring valve (75) in the introduction port (61), the fluid in the compression chamber (45) is going to flow back to the introduction port (61). At this time, since the valve retainer (90) of the present invention has the shape which exposes part of the valve end portion (84) to the outflow opening surface (62) of the introduction port (61), the pressure of the fluid of the compression chamber (45) acts on the exposed part of the valve end portion (84). As a result, the valve end portion (84), which receives the pressure of the fluid, is quickly pushed back to the position closing the introduction port (61). Thus, this feature can cause the leaf spring valve (75) in the open state to quickly return to the closed state, thereby reducing an amount of the fluid flowing backward.

A second aspect of the present invention is an embodiment of the first aspect. In the second aspect, the valve retainer (90) has the shape which exposes at least a central portion (84a) of the valve end portion (84) in the open state to the outflow opening surface (62) of the introduction port (61).

In the second aspect, the central portion (84a) of the valve end portion (84) is exposed to the outflow opening surface (62). Therefore, if the fluid in the compression chamber (45) is going to flow back, the pressure of the fluid is likely to act on a portion of the center of gravity of the valve end portion (84). This configuration makes it possible to return the valve end portion (84) to the closed state further quickly.

A third aspect of the present invention is an embodiment of the first or second aspect. In the third aspect, the valve retainer (90) has an abutment portion (92) with which the valve end portion (84) in the open state comes into contact, and the abutment portion (92) has an opening (96) or a cutout (97) through which the valve end portion (84) is exposed.

In the third aspect, when the leaf spring valve (75) enters the open state, the valve end portion (84) comes into contact with the abutment portion (92) of the valve retainer (90). Thus, the valve end portion (84) is not allowed to move further. On the other hand, the abutment portion (92) has the opening (96) or the cutout (97). Accordingly, part of the valve end portion (84) coming into contact with the abutment portion (92) can be exposed to the outflow opening surface (62) through the opening (96) or the cutout (97).

A fourth aspect of the present invention is an embodiment of the third aspect. In the fourth aspect, the abutment portion (92) is comprised of an annular member having the opening (96) therein.

In the fourth aspect, the abutment portion (92), which has an annular shape, can increase the contact area between the valve end portion (84) and the abutment portion (92), thereby enabling reduction in a surface pressure acting on the abutment portion (92). On the other hand, the opening (96) formed in the annular abutment portion (92) can expose part of the valve end portion (84) to the outflow opening surface (62).

A fifth aspect of the present invention is an embodiment of the third or fourth aspect. In the fifth aspect, the valve retainer (90) includes a cylindrical portion (91) having a cylindrical shape that fits the inner peripheral wall (63) of the introduction port (61) and surrounding the abutment portion (92), and a coupling portion (93) coupling the cylindrical portion (91) and the abutment portion (92) together.

In the fifth aspect, coupling the cylindrical portion (91) to the abutment portion (92) with the coupling portion (93) makes it possible to hold the abutment portion (92) inside the cylindrical portion (91).

A sixth aspect of the present invention is an embodiment of the fifth aspect. In the sixth aspect, the coupling portion is comprised of a plurality of ribs (93) extending in a radial direction between the abutment portion (92) and the cylindrical portion (91), and a flow hole (95) for the fluid is formed between the cylindrical portion (91), the abutment portion (92), and the plurality of ribs (93).

In the sixth aspect, coupling the cylindrical portion (91) to the abutment portion (92) with the plurality of ribs (93) makes it possible to support the abutment portion (92) inside the cylindrical portion (91). Further, the plurality of flow holes (95) can be formed between the cylindrical portion (91), the abutment portion (92), and the plurality of ribs (93).

A seventh aspect of the present invention is an embodiment of the fifth or sixth aspect. In the seventh aspect, the cylindrical portion (91) includes a body portion (91a) having a cylindrical shape, and an annular flange (91b) extending outward in the radial direction from an upstream-side end of the body portion (91a), the inner peripheral wall (63) of the introduction port (61) has a large-diameter portion (64) in which the flange (91b) is fitted, and a small-diameter portion (65) which is located between the large-diameter portion (64) and the outflow opening surface (62) of the introduction port (61), and in which the body portion (91a) is fitted.

In the seventh aspect, the cylindrical portion (91) and the flange (91b) of the valve retainer (90) are fitted in the small-diameter portion (65) and the large-diameter portion (64) of the introduction port (61). This configuration can reliably keep the valve retainer (90) from being detached and falling toward the compression chamber (45). Since the small-diameter portion (65) is formed between the large-diameter portion (64) and the outflow opening surface (62) of the introduction port (61), an end of the cylindrical portion (91) can be extended to reach a vicinity of the outflow opening surface (62). This configuration can reduce, in the introduction port (61), a dead volume between the valve retainer (90) and the compression chamber (45).

An eighth aspect of the present invention is an embodiment of any one of the third to seventh aspects. In the eighth aspect, the abutment portion (92) includes an inclined surface (89) extending along the valve end portion (84) in the open state.

In the eighth aspect, even if the valve end portion (84) in the closed state is inclined, the inclined valve end portion (84) comes in contact with the inclined surface (89) of the abutment portion (92). This makes it possible to substantially prevent a situation in which only part of the valve end portion (84) comes into contact with the abutment portion (92), thereby enabling reduction in a surface pressure acting on the abutment portion (92).

A ninth aspect of the present invention is an embodiment of any one of the first to eighth aspects. In the ninth aspect, in the leaf spring valve (75), an arc-shaped cutout (87, 88) is formed at least one of a side edge of a connecting portion between the frame portion (83) and the neck portion (85) or a connecting portion between the neck portion (85) and the valve end portion (84).

In the ninth aspect, forming the arc-shaped cutout (87, 88) at the side edge of the connecting portion between the frame portion (83) and the neck portion (85) and/or the side edge of the connecting portion between the neck portion (85) and the valve end portion (84) can reduce stress concentration at these connecting portions when the leaf spring valve (75) is elastically deformed.

A tenth aspect of the present invention is an embodiment of any one of the first to ninth aspects. In the tenth aspect, the compression mechanism (40) includes a cylinder (42) which forms the compression chamber (45) and a piston (51) which eccentrically rotates inside the cylinder (42).

The compression mechanism (40) of the tenth aspect is configured as a compression mechanism of the so-called swing piston type in which the piston (51) eccentrically rotates inside the cylinder (42) or a compression mechanism of a rolling piston type (rotary type). The compression mechanism (40) of any of these types compresses a fluid at a relatively higher speed than, for example, a scroll compression mechanism. Therefore, if the fluid flows backward due to delay in returning the leaf spring valve, the mass flow rate at which the fluid flows back tends to be relatively large, as described previously.

In contrast, the present invention, according to which the leaf spring valve (75) can be quickly returned to the closed state, makes it possible to effectively curb a decrease in the compression efficiency which may be caused by backflow of the fluid.

### ADVANTAGES OF THE INVENTION

The present invention, in which the valve retainer (90) has a shape that exposes part of the valve end portion (84) of the leaf spring valve (75), makes it possible to quickly bring the leaf spring valve (75) into the closed state with help of the pressure of the fluid flowing backward. As a result, an amount of the fluid flowing back toward the introduction port (61) can be reduced, thereby achieving desired compression efficiency.

### BRIEF DESCRIPTION OF THE DRAWINGS

FIG. 1 is a schematic diagram illustrating a configuration of a refrigerant circuit of an air conditioner according to an embodiment.
FIG. 2 is a vertical cross-sectional view illustrating an overall configuration of a compressor.
FIG. 3 is a horizontal cross-sectional view of a compression mechanism.
FIG. 4 is an exploded perspective view of a check valve mechanism.
FIG. 5 is a horizontal cross-sectional view illustrating, on an enlarged scale, a main portion of an injection mechanism with a leaf spring valve being in a closed state.
FIG. 6 is a front view of the leaf spring valve, as viewed from a compression chamber.
FIG. 7 is a front view of a valve retainer, as viewed from the compression chamber, wherein a valve end portion in an open state is schematically indicated by a phantom line (chain double-dashed line).
FIG. 8 is a horizontal cross-sectional view illustrating, on an enlarged scale, the main portion of the injection mechanism with the leaf spring valve being in an open state.
FIG. 9 is a front view of a valve retainer according to a first variation, as viewed from the compression chamber, wherein a valve end portion in an open state is schematically indicated by a phantom line (chain double-dashed line).
FIG. 10 is a front view of a valve retainer according to a second variation, as viewed from the compression chamber, wherein a valve end portion in an open state is schematically indicated by a phantom line (chain double-dashed line).
FIG. 11 is a horizontal cross-sectional view illustrating, on an enlarged scale, a main portion of an injection mechanism according to a third variation, with a leaf spring valve being in a closed state.
FIG. 12 is a horizontal cross-sectional view illustrating, on an enlarged scale, the main portion of the injection mechanism according to the third variation, with the leaf spring valve being in an open state.
FIG. 13 is a front view of a valve retainer according to a fourth variation, as viewed from the compression chamber, wherein a valve end portion in an open state is schematically indicated by a phantom line (chain double-dashed line).
FIG. 14 is a perspective view of a valve retainer according to a fifth variation, as viewed from the compression chamber, wherein a valve end portion in an open state is schematically indicated by a phantom line (chain double-dashed line).

### DESCRIPTION OF EMBODIMENTS

An embodiment of the present disclosure will now be described in detail with reference to the drawings. The embodiment below is merely exemplary one in nature, and is not intended to limit the scope, applications, or use of the present invention.

### «Embodiment of Invention»

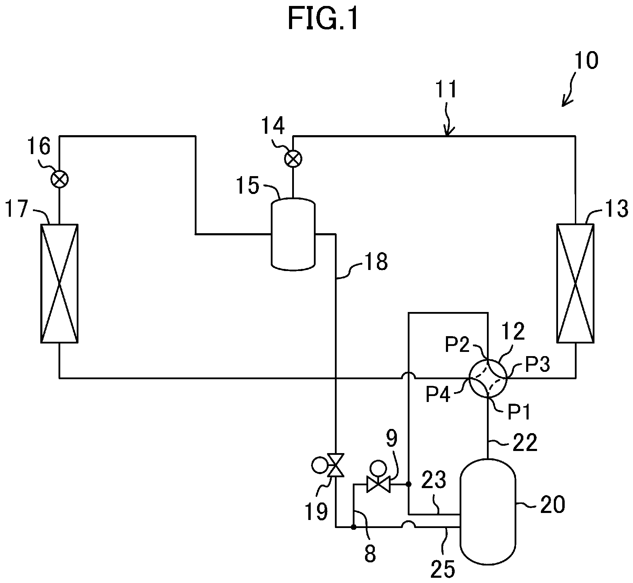

A compressor (20) according to this embodiment is a rotary compressor that compresses a fluid (refrigerant). As illustrated in FIG. 1, the compressor (20) is connected to a refrigerant circuit (11) of an air conditioner (10). The air conditioner (10) switches between a cooling operation and a heating operation.

### <Overall Configuration of Refrigerant Circuit>

As illustrated in FIG. 1, the refrigerant circuit (11) is filled with a refrigerant, and performs a refrigeration cycle by circulating the refrigerant. The refrigerant circuit (11) is connected to the compressor (20), a four-way switching valve (12), an outdoor heat exchanger (13), an outdoor expansion valve (14), a gas-liquid separator (15), an indoor expansion valve (16), and an indoor heat exchanger (17). The four-way switching valve (12) has a first port (P1) communicating with a discharge pipe (22) of the compressor (20). The four-way switching valve (12) has a second port (P2) communicating with a suction pipe (23) of the compressor (20). The four-way switching valve (12) has a third port (P3) communicating with a gas end of the outdoor heat exchanger (13). The four-way switching valve (12) has a fourth port (P4) communicating with a gas end of the indoor heat exchanger (17).

The refrigerant circuit (11) is connected to an intermediate injection pipe (18) that allows the inside of the gas-liquid separator (15) and an intermediate pipe (25) of the compressor (20) to communicate with each other. An intermediate electromagnetic valve (19) that is an open/close valve is connected to the intermediate injection pipe (18).

The refrigerant circuit (11) is connected to a suction communication pipe (8). The suction communication pipe (8) has an end connected to the intermediate injection pipe (18) at a point downstream of the intermediate electromagnetic valve (19). The other end of the suction communication pipe (8) is connected to a suction line of the compressor (20). A suction electromagnetic valve (9), which is an open/close valve, is connected to the suction communication pipe (8).

During the cooling operation, the four-way switching valve (12) is in a first state (indicated with broken curves in FIG. 1), in which the first port (P1) communicates with the third port (P3) while the second port (P2) communicates with the fourth port (P4). The refrigerant compressed by the compressor (20) condenses in the outdoor heat exchanger (13), is decompressed by the indoor expansion valve (16), and then evaporates in the indoor heat exchanger (17).

During the heating operation, the four-way switching valve (12) is in a second state (indicated with solid curves in FIG. 1), in which the first port (P1) communicates with the fourth port (P4) while the second port (P2) communicates with the third port (P3). The refrigerant compressed by the compressor (20) condenses in the indoor heat exchanger (17), is decompressed by the outdoor expansion valve (14), and then evaporates in the outdoor heat exchanger (13).

The refrigerant circuit (11) performs an operation (injection operation) in which an intermediate-pressure refrigerant is introduced into a compression chamber (45) of the compressor (20). When the injection operation is performed, the intermediate electromagnetic valve (19) is opened and the suction electromagnetic valve (9) is closed. When the injection operation is stopped, the intermediate electromagnetic valve (19) is closed and the suction electromagnetic valve (9) is opened. The intermediate-pressure refrigerant in the gas-liquid separator (15) passes through the intermediate injection pipe (18) to be introduced into the intermediate pipe (25) of the compressor (20).

### <Overall Configuration of Compressor>

The overall configuration of the compressor (20) will be described with reference to FIGS. 1 to 3. The compressor (20) includes a casing (21), a drive mechanism (30), and a compression mechanism (40). The drive mechanism (30) and the compression mechanism (40) are housed in the casing (21). The casing (21) has the shape of a hollow cylinder. An internal space (S) of the casing (21) is filled with the refrigerant compressed by the compressor (20). In other words, the compressor (20) is configured as a compressor of the so-called high-pressure dome type. One discharge pipe (22) is connected to an upper portion of the casing (21). One suction pipe (23) and one intermediate pipe (25) (see FIG. 1) are connected to a body portion of the casing (21).

The drive mechanism (30) constitutes a drive source for the compression mechanism (40). The drive mechanism (30) includes an electric motor (31) and a drive shaft (35). The electric motor (31) has a stator (32) fixed to the body portion of the casing (21) and a rotor (33) inserted in the stator (32). The drive shaft (35) is fixed to the inside of the rotor (33). The electric motor (31) is supplied with electric power through an inverter device. That is, the electric motor (31) is of the inverter type of which the number of revolutions is variable.

The drive shaft (35) has a shaft main portion (36) and an eccentric portion (37) formed on a lower portion of the shaft main portion (36). The shaft main portion (36) vertically extends in the electric motor (31) to reach a lower portion of the compression mechanism (40). The axial center of the eccentric portion (37) is deviated by a predetermined amount from the axial center of the shaft main portion (36).

The compression mechanism (40) of this embodiment includes a cylinder (42) and a piston (51), and is configured as a compressor of the so-called swing piston type in which the piston (51) makes a swing motion inside the cylinder (42). The compression mechanism (40) includes a front head (41), the cylinder (42), and a rear head (43) that are arranged in this order from above to below.

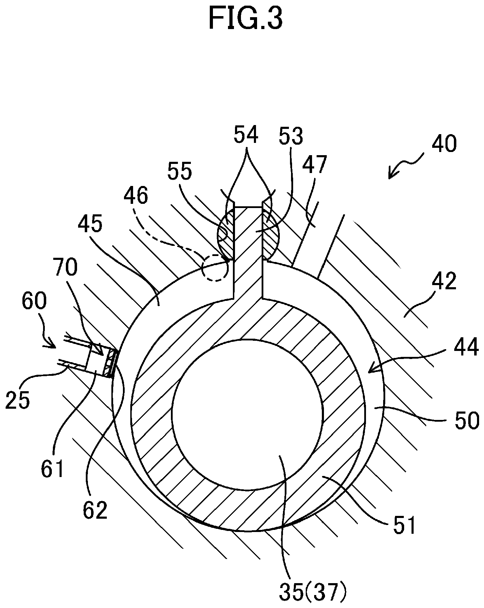

The front head (41) is fixed to the body portion of the casing (21). The front head (41) closes an opening in an upper surface of a cylinder chamber (44) of the cylinder (42). The front head (41) has, in its central portion, a boss (41a) extending upward in an axial direction of the drive shaft (35). On the inner peripheral surface of the boss (41a), a main bearing is formed to rotatably support the drive shaft (35). The front head (41) has a discharge port (46) (see FIG. 3). The discharge port (46) has a starting end communicating with the compression chamber (45) of the cylinder (42), and a terminal end communicating with the internal space (S). The discharge port (46) is opened and closed by a discharge valve (not shown) such as a reed valve.

The rear head (43) is fixed to the body portion of the casing (21). The rear head (43) closes an opening in a lower surface of the cylinder chamber (44). The rear head (43) has, in its central portion, an auxiliary bearing that rotatably supports the drive shaft (35).

The cylinder (42) has the shape of a ring or a cylinder, and includes therein the cylinder chamber (44). The cylinder chamber (44) has the shape of a perfect circle in horizontal cross section (i.e., in cross section perpendicular to the axis of the drive shaft (35)).

The cylinder (42) has a suction port (47) communicating with a suction chamber (50) of the cylinder chamber (44). The suction pipe (23) is connected to the suction port (47). Bush holes 55 are formed in a portion, of the cylinder (42), adjacent to the top dead center.

The piston (51) is disposed in the cylinder chamber (44) and makes a swinging rotational motion along the inner peripheral surface of the cylinder chamber (44). The piston (51) has an annular shape in which the eccentric portion (37) is fitted.

The compression mechanism (40) includes a blade (53) and a pair of bushes (54). As illustrated in FIG. 3, the blade (53) is provided integrally with the piston (51). The blade (53) is coupled to a portion of the outer peripheral surface of the piston (51), the portion being located near the bush holes (55) (i.e., being located adjacent to the top dead center). The blade (53) has the shape of a plate and protrudes outward in the radial direction of the cylinder chamber (44) from the outer peripheral surface of the piston (51). The blade (53) divides the cylinder chamber (44) into the suction chamber (50) and the compression chamber (45). The blade (53) is configured to make a swinging motion as the piston (51) rotates.

Each of the pair of bushes (54) has a substantially semicircular in cross section **perpendicular to the axis,** and is inserted into the bush hole (55). The pair of bushes (54) is arranged so that their respective flat surfaces face each other. The blade (53) is inserted between these flat surfaces so that the blade (53) can move forward and backward. In other words, the bushes (54) swing inside the bush holes (55) while holding the blade (53) so that the blade (53) is movable forward and backward.

### -Basic Operation of Compressor-

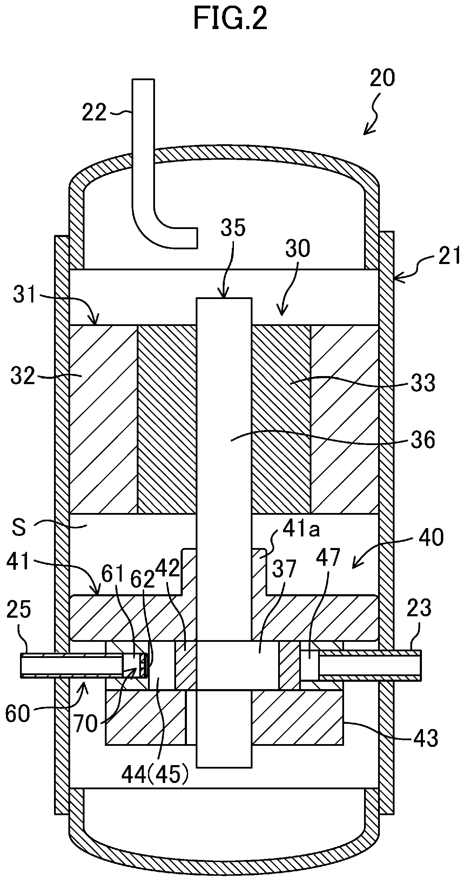

A basic operation of the compressor (20) will be described with reference to FIGS. 2 and 3.

When the electric motor (31) is energized, the rotor (33) rotates. Accordingly, the drive shaft (35), the eccentric portion (37), and the piston (51) are rotated. As a result, the compression mechanism (40) compresses the refrigerant so that the refrigerant circuit (11) performs the refrigeration cycle. Specifically, in the refrigerant circuit (11), the low-pressure refrigerant flows through the suction pipe (23), and then is compressed by the compression mechanism (40). The refrigerant that has been compressed by the compression mechanism (40) (i.e., the high-pressure refrigerant) flows into the internal space (S), and passes through the discharge pipe (22) to enter the refrigerant circuit (11).

### -Operation of Compression Mechanism-

It is now described how the compression mechanism (40) specifically operates with reference to FIG. 3.

The compression mechanism (40) performs a suction stroke, a compression stroke, and a discharge stroke sequentially and repeatedly. When the piston (51) rotates in the clockwise direction of FIG. 3, the capacity of the suction chamber (50) gradually increases. As a result, the low-pressure refrigerant is gradually sucked into the suction chamber (50) via the suction port (47) (the suction stroke). This suction stroke takes place until a moment immediately before the sealing point between the piston (51) and the cylinder chamber (44) completely passes the suction port (47).

Once the sealing point passes the suction port (47), the space functioning as the suction chamber (50) turns into the compression chamber (45). When the piston (51) rotates further, the capacity of the compression chamber (45) gradually decreases so that the refrigerant in the compression chamber (45) is compressed (the compression stroke). When the internal pressure of the compression chamber (45) becomes equal to or higher than a predetermined value, the discharge valve is opened, and the refrigerant in the compression chamber (45) is discharged into the internal space (S) through the discharge port (46) (the discharge stroke).

### <Overall Configuration of Injection Mechanism>

The compressor (20) includes an injection mechanism (60) configured to perform an injection operation. The configuration of the injection mechanism (60) will be described with reference to FIGS. 2 to 8. The injection mechanism (60) includes an introduction port (61) through which the intermediate-pressure fluid is introduced into the cylinder chamber (44) (strictly, the compression chamber (45)), and a check valve mechanism (70) for opening and closing the introduction port (61). The introduction port (61) and the check valve mechanism (70) of this embodiment are provided inside the cylinder (42).

### <Introduction Port>

The introduction port (61) illustrated in FIGS. 2, 3, and 5 passes through the cylinder (42) in a radial direction. The introduction port (61) has a starting end connected to the intermediate pipe (25). The terminal end (outflow end) of the introduction port (61) opens into the cylinder chamber (44) or the compression chamber (45). Consequently, the intermediate pipe (25) and the compression chamber (45) communicate with each other via the introduction port (61). The outflow end of the introduction port (61) has an outflow opening surface (62) having a circular shape. The outflow opening surface (62) of the introduction port (61) is suitably provided at a position on the inner peripheral surface of the compression chamber (45), the position corresponding to a sealing point which is provided when the piston (51) is at a rotation angle of 180° to 360°. Note that the rotation angle is 0° when the piston (51) is at the top dead center (positioned closest to the bush holes 55).

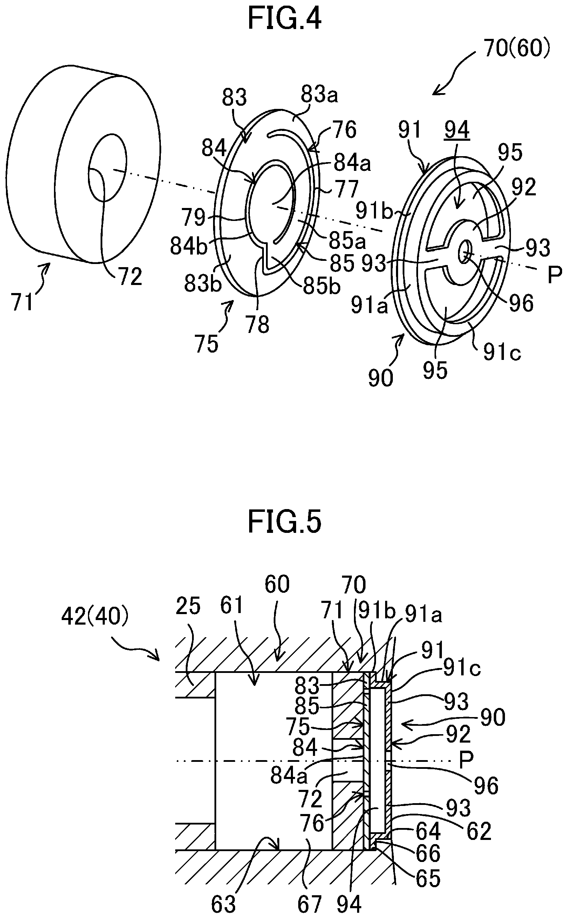

As illustrated in FIG. 5, the inner peripheral wall (63) of the introduction port (61) has a large-diameter portion (64) and a small-diameter portion (65). The large-diameter portion (64) extends from the outer peripheral surface of the cylinder (42) to a portion, of the introduction port (61), located slightly inward with respect to the outflow opening surface (62). The small-diameter portion (65) extends from the large-diameter portion (64) to the outflow opening surface (62) of the introduction port (61). The axial center of the large-diameter portion (64) and that of the small-diameter portion (65) are on the same axis (the axial center P in FIG. 5). The inside diameter of the large-diameter portion (64) is larger than that of the small-diameter portion (65). Thus, on the inner peripheral wall (63) of the introduction port (61), an annular step (66) is formed at the boundary between the large-diameter portion (64) and the small-diameter portion (65).

A portion, of the introduction port (61), located upstream of the check valve mechanism (70) constitutes a primary side passage (67).

### <Overall Configuration of Check Valve Mechanism>

The check valve mechanism (70) is provided adjacent to the outflow end of the introduction port (61). As illustrated in FIGS. 4 and 5, the check valve mechanism (70) includes a valve seat (71), a leaf spring valve (75), and a valve retainer (90) in this order in the refrigerant flow direction. The axial center of the valve seat (71), that of the leaf spring valve (75), and that of the valve retainer (90) are all on the same axis (the axial center P).

### <Valve Seat>

As illustrated in FIGS. 4 and 5, the valve seat (71) has a cylindrical shape and is fitted in the large-diameter portion (64) of the introduction port (61). The valve seat (71) is fixed to the inner peripheral wall (63) of the introduction port (61) by, for example, press fitting. The valve seat (71) has a hole (72) formed therein. The hole (72) has a cylindrical shape which is coaxial with the introduction port (61).

### <Leaf Spring Valve>

The leaf spring valve (75) is interposed between the valve seat (71) and the valve retainer (90). The leaf spring valve (75) has a substantially disc shape and is fitted in the large-diameter portion (64) of the introduction port (61). The leaf spring valve (75) is made of, for example, an elastically deformable metal material.

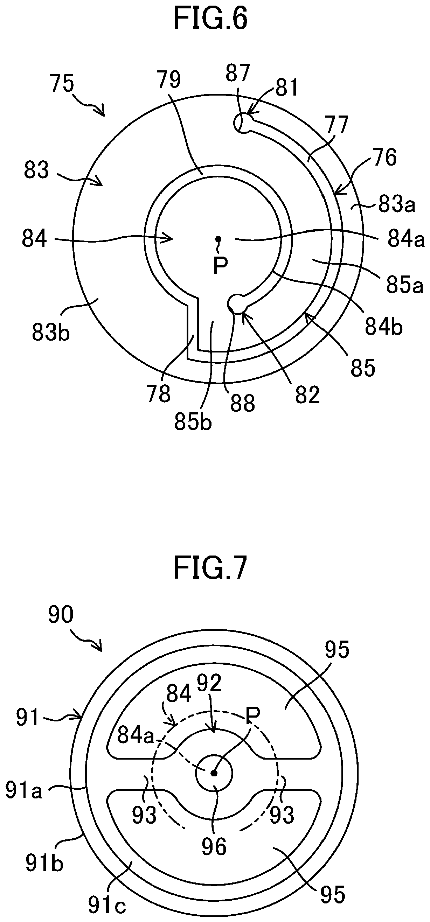

As illustrated in FIGS. 4 and 6, the leaf spring valve (75) has a cutout slot (76) extending in a substantially spiral form. The cutout slot (76) includes a large-diameter slot portion (77), a straight slot portion (78), and a small-diameter slot portion (79) in this order from the outer periphery of the leaf spring valve (75) toward the center thereof. The large-diameter slot portion (77), the straight slot portion (78), and the small-diameter slot portion (79) have generally the same width.

The large-diameter slot portion (77) has an arc shape (a fan shape or a semicircular shape) extending along the outer peripheral edge of the leaf spring valve (75). The straight slot portion (78) extends substantially in the radial direction so as to connect one end of the large-diameter slot portion (77) and one end of the small-diameter slot portion (79) together. The small-diameter slot portion (79) has an arc shape of which one end continues to the straight slot portion (78) and the other end reaching the vicinity of the straight slot portion (78). The small-diameter slot portion (79) has a smaller radius of curvature than the large-diameter slot portion (77).

A first circular hole (81) is formed at the outer end of the cutout slot (76). A second circular hole (82) is formed at the inner end of the cutout slot (76). The first circular hole (81) and the second circular hole (82) has an inside diameter larger than the width of the cutout slot (76).

The cutout slot (76) divides the leaf spring valve (75) into a frame portion (83), a valve end portion (84), and a neck portion (85).

The frame portion (83) has a substantially annular shape fitting the inner peripheral wall (63) of the introduction port (61). The frame portion (83) is clamped between the valve seat (71) and the valve retainer (90). The frame portion (83) includes a first region (83a) defined between the large-diameter slot portion (77) and the outer peripheral edge of the leaf spring valve (75), and a second region (83b) defined between the small-diameter slot portion (79) and the outer peripheral edge of the leaf spring valve (75). The second region (83b) is wider in the radial direction than the first region (83a).

The valve end portion (84) is located inside the frame portion (83). The valve end portion (84) has a substantially disc shape defined inside the small-diameter slot portion (79). The axial center of the valve end portion (84) and that of the hole (72) of the valve seat (71) are on the same axis (the axial center P). The outer diameter of the valve end portion (84) is larger than the inside diameter of the hole (72) of the valve seat (71). The leaf spring valve (75) in a state before elastic deformation (in a closed state) has the valve end portion (84) being in contact with the valve seat (71). In this state, a central portion (84a) of the valve end portion (84) completely covers the hole (72), so that the valve end portion (84) closes the hole (72) (see FIG. 5).

The neck portion (85) has a substantially arc shape and connects the frame portion (83) and the valve end portion (84) together. The neck portion (85) includes an arc plate portion (85a) continuing to the frame portion (83), and a vertical plate portion (85b) continuing to the arc plate portion (85a) and the valve end portion (84). The arc plate portion (85a) is located between the large-diameter slot portion (77) and the small-diameter slot portion (79). The vertical plate portion (85b) extends along the straight slot portion (78) in the radial direction.

When an internal pressure (intermediate pressure) on an upstream side of the check valve mechanism (70) in the introduction port (61) becomes higher by a predetermined value than an internal pressure of the compression chamber (45), a pressure acting on the central portion (84a) of the valve end portion (84) from the hole (72) pushes and moves the valve end portion (84) toward the downstream side of the refrigerant flow. Consequently, the neck portion (85) is elastically deformed, so that the valve end portion (84) is displaced toward the downstream side. As a result, the valve end portion (84) opens the hole (72), thereby bringing the leaf spring valve (75) into an open state.

At a side edge of a connecting portion between the frame portion (83) and the neck portion (85), an arc-shaped first cutout (87) is provided due to the formation of the first circular hole (81) described above. Making the connecting portion between the frame portion (83) and the neck portion (85) have such an arc-shaped side edge (rounded side edge) can reduce stress concentration at the connecting portion between the frame portion (83) and the neck portion (85).

At a side edge of a connecting portion between the neck portion (85) and the valve end portion (84), an arc-shaped second cutout (88) is provided due to the formation of the second circular hole (82) described above. Making the connecting portion between the neck portion (85) and the valve end portion (84) have such an arc-shaped side edge (rounded side edge) can reduce stress concentration at the connecting portion between the neck portion (85) and the valve end portion (84).

### <Valve Retainer>

The valve retainer (90) is disposed at the outflow end of the introduction port (61). As illustrated in FIGS. 4, 5, and 7, the valve retainer (90) includes a cylindrical portion (91) that fits the inner peripheral wall (63) of the introduction port (61), an abutment portion (92) disposed inside the cylindrical portion (91), and two ribs (93) (coupling portion) connecting the cylindrical portion (91) and the abutment portion (92) together.

The cylindrical portion (91) has a cylindrical shape protruding in the downstream direction of the flow of the refrigerant. The cylindrical portion (91) has a body portion (91a) as a cylindrical body, an annular flange (91b) extending outward in the radial direction from an upstream-side end of the body portion (91a), and an inner peripheral plate portion (91c) having an annular shape and extending inward in the radial direction from a downstream-side end of the body portion (91a).

The body portion (91a) is fitted in the small-diameter portion (65) of the introduction port (61). The body portion (91a) defines therein a valve receiving space (94) that has a cylindrical shape and allows the valve end portion (84) and the neck portion (85) to be displaced. The flange (91b) is fitted in the large-diameter portion (64) of the introduction port (61) and abuts against the annular step (66). Thus, the flange (91b) reliably keeps the valve retainer (90) from being detached and falling toward the compression chamber (45).

A downstream end of the body portion (91a) and the inner peripheral plate portion (91c) are substantially coplanar with the outflow opening surface (62) of the introduction port (61). Consequently, in the introduction port (61), substantially no gap is provided between the valve retainer (90) and the compression chamber (45). This configuration contributes to reduction in the so-called dead volume.

Each of the ribs (93) has the shape of a vertically oriented plate and extends from the inner peripheral edge of the inner peripheral plate portion (91c) to the outer peripheral edge of the abutment portion (92) in the radial direction. The two ribs (93) are arranged in the circumferential direction so as to be spaced from each other at equal intervals (equal pitches). In other words, the two ribs (93) form an angle of about 180° with each other, and are arranged on the same straight line. Two flow holes (95) are formed between the cylindrical portion (91), the abutment portion (92), and the ribs (93). Each of the flow holes (95) is a substantially semicircular hole through which the refrigerant can flow.

The abutment portion (92) is located inside the inner peripheral plate portion (91c) of the cylindrical portion (91). The abutment portion (92) is comprised of an annular member having an opening (96) therein. The abutment portion (92) is located so as to axially overlapping with the hole (72) of the valve seat (71) and the valve end portion (84) being in the closed state. More precisely, the axial center of the abutment portion (92) is on the same axis (axial center P) on which the axial centers of the hole (72) of the valve seat (71) and the valve end portion (84) are located. The outside diameter of the abutment portion (92) is slightly smaller than that of the valve end portion (84). The outside diameter of the abutment portion (92) is slightly larger than that of the hole (72) of the valve seat (71).

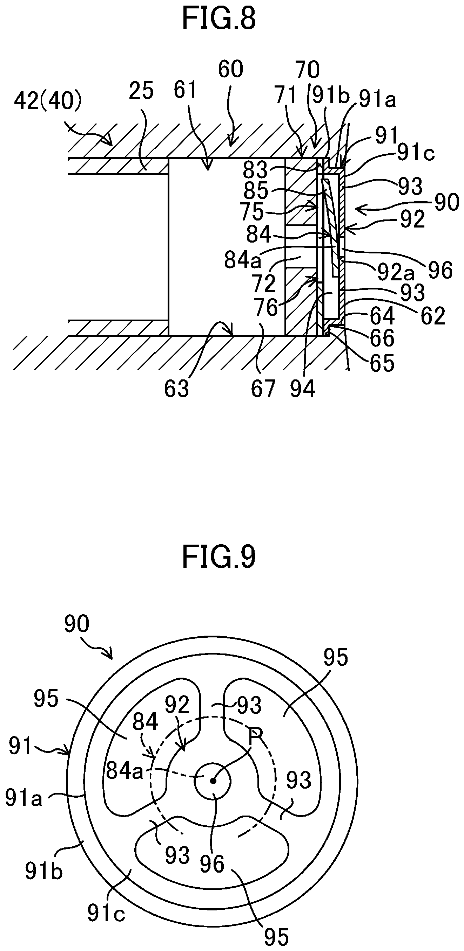

When the leaf spring valve (75) is in the open state, the valve end portion (84) moves toward the downstream side, as previously described. Consequently, at least the valve end portion (84) of the leaf spring valve (75) comes into contact with the abutment portion (92) of the valve retainer (90) (see FIG. 8). In other words, the abutment portion (92) restricts movement of the valve end portion (84) toward the compression chamber (45). Note that the neck portion (85) may come into contact with the abutment portion (92), together with the valve end portion (84).

The opening (96) of the abutment portion (92) has a circular shape coaxial with the axial canter P. In other words, when viewed in an axial direction, the opening (96) and the valve end portion (84) overlap with each other. The opening (96) is an exposure hole provided to expose part of the valve end portion (84) in the open state to the outflow opening surface (62) of the introduction port (61) or the compression chamber (45). More specifically, the central portion (84a) of the valve end portion (84) in the open state is exposed to the outflow opening surface (62) or the compression chamber (45) through the opening (96) of the valve retainer (90). The abutment portion (92) is coaxial with, and smaller in outside diameter than, the valve end portion (84). Accordingly, part of the outer peripheral portion (84b) of the valve end portion (84) is also exposed to the outflow opening surface (62) or the compression chamber (45). As can be seen, the valve retainer (90) has a shape which allows part of the valve end portion (84) to be exposed to the outflow opening surface (62) or the compression chamber (45).

### -Injection Operation-

In the refrigeration cycle of the refrigerant circuit (11), an injection operation in which the intermediate-pressure refrigerant is introduced in the compression chamber (45) is carried out as appropriate during, for example, the cooling operation.

When the injection operation is performed, the intermediate electromagnetic valve (19) of the refrigerant circuit (11) illustrated in FIG. 1 is opened while the suction electromagnetic valve (9) is closed. As a result, the intermediate-pressure refrigerant in the gas-liquid separator (15) is introduced into the intermediate pipe (25) of the compressor (20) through the intermediate injection pipe (18).

When the intermediate-pressure refrigerant is introduced into the intermediate pipe (25), the primary side passage (67) of the introduction port (61) also comes to have the intermediate pressure. Consequently, in the check valve mechanism (70), the intermediate pressure acts on a surface (front surface) of the leaf spring valve (75) in the closed state, the surface facing the primary side passage (67). On the other hand, the valve receiving space (94) communicates with the compression chamber (45) through the flow hole (95) and the opening (96) of the valve retainer (90). Consequently, a pressure equivalent to the internal pressure of the compression chamber (45) acts on the back surface of the leaf spring valve (75) in the closed state.

During the compression operation, at a timing when the internal pressure of the primary side passage (67) becomes higher than the internal pressure of the compression chamber (45), the pressure acting on the front surface of the leaf spring valve (75) in the closed state becomes higher than the pressure acting on the back surface of the leaf spring valve (75), so that the leaf spring valve (75) is brought into the open state. Specifically, the valve end portion (84) is pressed by the intermediate pressure to be moved toward the compression chamber (45), so that the neck portion (85) is elastically deformed also toward the compression chamber (45). At this time, the neck portion (85) is deformed in a bent or torsional manner so that the valve end portion (84) is inclined most toward a central portion of the arc plate portion (85a) in the radial direction. Consequently, as illustrated in FIG. 8, the valve end portion (84) comes into contact with the abutment portion (92) of the valve retainer (90) and is elastically deformed along the abutment portion (92).

When the leaf spring valve (75) or the valve end portion (84) is brought into the open state in this manner, the hole (72) of the valve seat (71) is released from the valve end portion (84). As a result, the intermediate-pressure refrigerant in the primary side passage (67) flows into the valve receiving space (94) through the hole (72). After passing through the cutout slot (76) of the leaf spring valve (75), this refrigerant is introduced into the compression chamber (45) through the two flow holes (95).

On the other hand, when the internal pressure of the compression chamber (45) becomes higher than the internal pressure of the primary side passage (67), the valve end portion (84) is pushed back toward the primary side passage (67) by the restoring force of the leaf spring valve (75). Once the leaf spring valve (75) returns to its original state (see FIG. 5), the valve end portion (84) closes the hole (72) of the valve seat (71), thereby substantially preventing backflow of the refrigerant.

### -Anti-Backflow Operation-

As described above, during the time taken by the leaf spring valve (75) in the open state to return to the closed state, since the valve end portion (84) has not yet closed the hole (72) completely, the refrigerant may flow into the hole (72) through the gap of the leaf spring valve (75). In such a case, part of the refrigerant compressed in the compression chamber (45) leaks into the introduction port (61), resulting in a decrease in the compression efficiency of the compression mechanism (40).

In particular, the compression mechanism (40) of this embodiment is of the swing piston type, and therefore, the refrigerant compressed in the compression chamber (45) is discharged through the discharge port (46) every time the drive shaft (35) makes one revolution. Therefore, the compression mechanism (40) of this embodiment compresses the refrigerant at a higher speed than a compression mechanism of another type (e.g., a scroll type) in which a drive shaft (35) compresses a refrigerant by making more than one revolution. Thus, even during the short time taken by the leaf spring valve (75) in the open sate to return to the closed state, the mass flow rate at which the refrigerant flows back to the primary side passage (67) tends to increase.

To address this issue, in the check valve mechanism (70) of this embodiment, part of the valve end portion (84) is exposed to the outflow opening surface (62) so that the leaf spring valve (75) quickly returns to the closed state. Specifically, in the check valve mechanism (70) of this embodiment, the central portion (84a) of the valve end portion (84) is exposed to the compression chamber (45) through the opening (96) of the abutment portion (92), and additionally, the outer peripheral portion (84b) of the valve end portion (84) is also exposed to the compression chamber (45).

With this configuration, when the refrigerant in the compression chamber (45) is going to flow back toward the introduction port (61), the pressure of the refrigerant acts on the central portion (84a) of the back surface and the outer peripheral portion (84b) of the valve end portion (84). As a result, the valve end portion (84) is pressed toward the primary side passage (67) by the pressure of this refrigerant, and quickly comes into contact with the valve seat (71). Thus, the configuration of this embodiment can cause the leaf spring valve (75) in the open state to quickly return to the closed state, thereby minimizing the mass flow rate at which the refrigerant flows back toward the introduction port (61).

### -Advantages of Embodiment-

Since the valve retainer (90) of this embodiment has a shape which exposes part of the valve end portion (84) to the outflow opening surface (62) of the introduction port (61), the valve end portion (84) can quickly return to the closed state with help of the pressure of the refrigerant in the compression chamber (45). This feature can curb a decrease in the compression efficiency which may be caused by backflow of the refrigerant.

In particular, the opening (96) formed at the center of the abutment portion (92) allows the pressure of the refrigerant to act on the central portion (84a) of the valve end portion (84). Consequently, the pressure of the refrigerant acts on the center of gravity of the valve end portion (84) and the vicinity the center of gravity, thereby enabling the valve end portion (84) to return to the closed state further quickly.

In addition, since the outer peripheral portion (84b) of the abutment portion (92) is also exposed, the abutment portion (92) can have a further increased area that receives the pressure of the refrigerant.

In this embodiment, the cylindrical portion (91) and the flange (91b) of the valve retainer (90) are fitted in the small-diameter portion (65) and the large-diameter portion (64) of the introduction port (61). This configuration can reliably keep the valve retainer (90) from being detached and falling toward the compression chamber (45). In addition, since an end of the cylindrical portion (91) extends to reach the vicinity of the outflow opening surface (62), the introduction port (61) has substantially no dead volume between the valve retainer (90) and the compression chamber (45). As a result, desired compression efficiency can be achieved.

Forming the arc-shaped cutouts (87, 88) at the side edge of the connecting portion between the frame portion (83) and the neck portion (85) and/or the side edge of the connecting portion between the neck portion (85) and the valve end portion (84) can reduce stress concentration at these connecting portions when the leaf spring valve (75) is elastically deformed.

### -Variation of Embodiment-

The valve retainer (90) of the embodiment described above may be configured as in the following variations.

### <First Variation>

FIG. 9 illustrates the valve retainer (90) according to a first variation, in which three ribs (93) extend between the cylindrical portion (91) and the abutment portion (92). The three ribs (93) are arranged in the circumferential direction so as to be spaced apart from each other at equal intervals (pitches of about 120°). Three flow holes (95) having a substantial fan shape are formed between the cylindrical portion (91), the abutment portion (92), and the three ribs (93).

### <Second Variation>

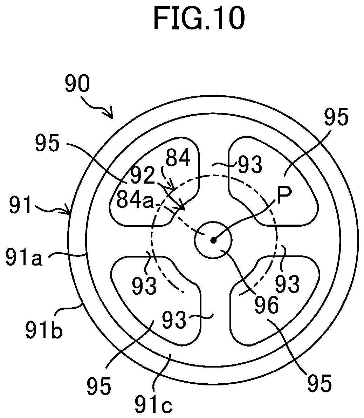

FIG. 10 illustrates the valve retainer (90) according to a second variation, in which four ribs (93) extend between the cylindrical portion (91) and the abutment portion (92). The four ribs (93) are arranged in the circumferential direction so as to be spaced apart from each other at equal intervals (pitches of about 90°). Four flow holes (95) having a substantial fan shape are formed between the cylindrical portion (91), the abutment portion (92), and the four ribs (93).

### <Third Variation>

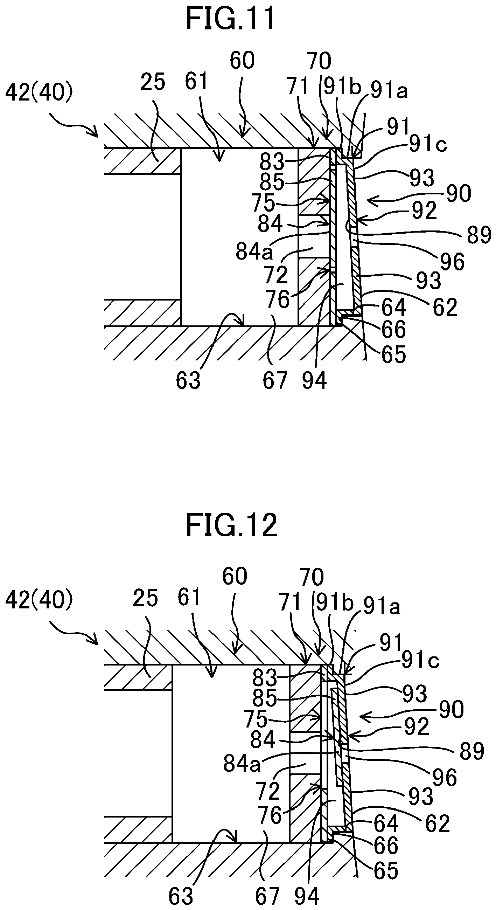

FIGS. 11 and 12 illustrate the valve retainer (90) according to a third variation, in which the ribs (93) and the abutment portion (92) of the embodiment described above are inclined with respect to a plane **perpendicular to the axis of** the cylindrical portion (91). Thus, in this configuration, a surface of the abutment portion (92) facing the leaf spring valve (75) is configured as an inclined surface (89) extending along the valve end portion (84) in the open state. That is, the direction in which the inclined surface (89) of the valve retainer (90) is inclined is determined in accordance with the direction in which the valve end portion (84) in the open state is inclined. In the third variation, as illustrated in FIG. 12, the valve end portion (84) in the open state and the inclined surface (89) of the abutment portion (92) are easily brought into surface contact with each other. This makes it possible to substantially prevent a situation in which only part of the valve end portion (84) comes into contact with the abutment portion (92), thereby enabling reduction in a surface pressure acting on the abutment portion (92). As a result, the valve retainer (90) can be reduced in size.

### <Fourth Variation>

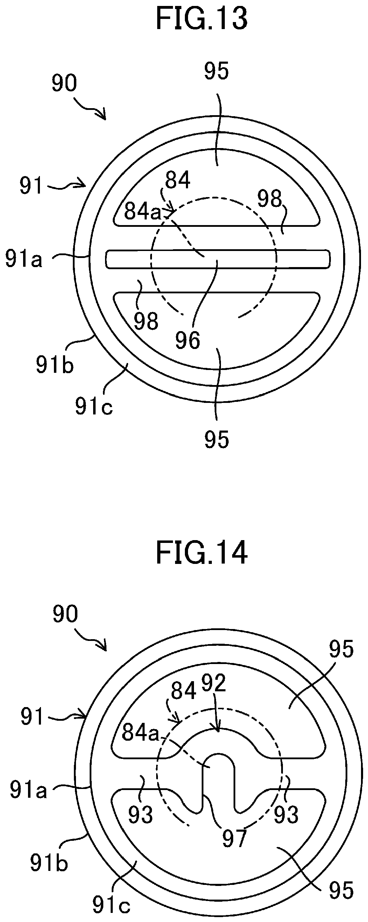

FIG. 13 illustrates the valve retainer (90) according to a fourth variation, in which two ribs (98) having the shape of a straight line are supported in the cylindrical portion (91). The ribs (98) have, when viewed in the axial direction, a portion which overlaps with the valve end portion (84) when the leaf spring valve (75) is at least in the open state. A horizontally-oriented opening (96) is formed between the two ribs (98) and the cylindrical portion (91). The opening (96) exposes the central portion (84a) and other portions of the valve end portion (84) in the open state to the outflow opening surface (62) of the introduction port (61). This configuration makes it possible to quickly return the leaf spring valve (75) to the closed state.

### <Fifth Variation>

FIG. 14 illustrates the abutment portion (92) according to a fifth variation, which has a cutout (97) instead of the opening (96) of the embodiment described above. The cutout (97) exposes the central portion (84a) of the valve end portion (84) in the open state and the vicinity of the central portion (84a) to the outflow opening surface (62) of the introduction port (61). This configuration makes it possible to cause the pressure of the refrigerant in the compression chamber (45) to act on the valve end portion (84) through the cutout (97), thereby enabling the leaf spring valve (75) to return to the closed state quickly.

### <<Other Embodiments>>

The compression mechanism (40) of the embodiment described above is of the swing piston type, and includes the piston (51) fixed to the blade (53). However, the compression mechanism (40) may be of the rolling piston type (rotary type) that includes a piston (51) and a vane corresponding to the blade that are separated from each other. Specifically, a compression mechanism of the rolling piston type has a cylinder forming a compression chamber and a piston (51) eccentrically rotating inside the cylinder. The piston (51) rotates around an eccentric portion (37). Such a rolling piston type compression mechanism compresses a refrigerant at relatively high speed. Therefore, also in this compression mechanism, increasing the speed at which the leaf spring valve (75) returns to the closed state makes it possible to curb a decrease in the compression efficiency which may be caused by backflow of the refrigerant, just like the embodiment.

Further, the injection mechanism (60) of the embodiment described above may be adopted to a compressor including a compression mechanism of the scroll type or any other type. The compression mechanism of the embodiment described above includes one compression chamber (45), that is, is of a single cylinder type. However, the injection mechanism (60) of the embodiment described above may be adopted to a two-cylinder type compressor including two compression chambers or a multi-cylinder type compressor including three or more compression chambers.

The refrigerant circuit (11) that introduces the intermediate-pressure refrigerant into the compression chamber (45) of the compressor (20) is not limited to that of the embodiment described above. Specifically, for example, the refrigerant circuit (11) may be connected to an internal heat exchanger which exchanges heat between the refrigerant flowing through a liquid line and the refrigerant flowing through the intermediate injection pipe (18).

### INDUSTRIAL APPLICABILITY

As described above, the present invention is useful as a compressor.

### DESCRIPTION OF REFERENCE CHARACTERS

- 31: Electric Motor
- 40: Compression Mechanism
- 42: Cylinder
- 45: Compression Chamber
- 51: Piston
- 60: Injection Mechanism
- 61: Introduction Port
- 62: Outflow Opening Surface
- 63: Inner Peripheral Wall
- 64: Large-Diameter Portion
- 65: Small-Diameter Portion
- 70: Check Valve Mechanism
- 75: Leaf Spring Valve
- 83: Frame Portion
- 84: Valve End Portion
- 84a: Central Portion
- 85: Neck Portion
- 87: First Cutout
- 88: Second Cutout
- 89: Inclined Surface
- 91: Cylindrical Portion
- 91a: Body Portion
- 91b: Flange
- 92: Abutment Portion (Annular Member)
- 93: Rib (Coupling Portion)
- 95: Flow Hole
- 96: Opening

## Claims

1. A compressor comprising:
an electric motor (31);
a compression mechanism (40) including a compression chamber (45) which compresses a fluid, and configured to be driven by the electric motor (31); and
an injection mechanism (60) including an introduction port (61) and a check valve mechanism (70), the introduction port (61) opening in the compression chamber (45), the check valve mechanism (70) opening and closing the introduction port (61), the injection mechanism (60) introducing the fluid having an intermediate pressure from the introduction port (61) to the compression chamber (45), wherein
the check valve mechanism (70) includes
a leaf spring valve (75) which has a frame portion (83) fitting an inner peripheral wall (63) of the introduction port (61), a valve end portion (84) located inside the frame portion (83), and a neck portion (85) connecting the valve end portion (84) and the frame portion (83) together, the leaf spring valve (75) opening the introduction port (61) by being elastically deformed, and
a valve retainer (90) which is disposed between the leaf spring valve (75) and an outflow opening surface (62) of the introduction port (61), and with which the valve end portion (84) of the leaf spring valve (75) in an open state comes into contact, and
the valve retainer (90) has a shape which exposes part of the valve end portion (84) in the open state to the outflow opening surface (62) of the introduction port (61).

2. The compressor of claim 1, wherein
the valve retainer (90) has the shape which exposes at least a central portion (84a) of the valve end portion (84) in the open state to the outflow opening surface (62) of the introduction port (61).

3. The compressor of claim 1 or 2, wherein
the valve retainer (90) has an abutment portion (92) with which the valve end portion (84) in the open state comes into contact, and
the abutment portion (92) has an opening (96) or a cutout (97) through which the valve end portion (84) is exposed.

4. The compressor of claim 3, wherein
the abutment portion (92) is comprised of an annular member having the opening (96) therein.

5. The compressor of claim 3 or 4, wherein
the valve retainer (90) includes a cylindrical portion (91) having a cylindrical shape that fits the inner peripheral wall (63) of the introduction port (61) and surrounding the abutment portion (92), and a coupling portion (93) coupling the cylindrical portion (91) and the abutment portion (92) together.

6. The compressor of claim 5, wherein
the coupling portion is comprised of a plurality of ribs (93) extending in a radial direction between the abutment portion (92) and the cylindrical portion (91), and
a flow hole (95) for the fluid is formed between the cylindrical portion (91), the abutment portion (92), and the plurality of ribs (93).

7. The compressor of claim 5 or 6, wherein
the cylindrical portion (91) includes a body portion (91a) having a cylindrical shape, and an annular flange (91b) extending outward in the radial direction from an upstream-side end of the body portion (91a),
the inner peripheral wall (63) of the introduction port (61) has a large-diameter portion (64) in which the flange (91b) is fitted, and a small-diameter portion (65) which is located between the large-diameter portion (64) and the outflow opening surface (62) of the introduction port (61), and in which the body portion (91a) is fitted.

8. The compressor of any one of claims 3 to 7, wherein
the abutment portion (92) includes an inclined surface (89) extending along the valve end portion (84) in the open state.

9. The compressor of any one of claims 1 to 8, wherein
in the leaf spring valve (75), an arc-shaped cutout (87, 88) is formed at least one of a side edge of a connecting portion between the frame portion (83) and the neck portion (85) or a connecting portion between the neck portion (85) and the valve end portion (84).

10. The compressor of any one of claims 1 to 9, wherein
the compression mechanism (40) includes a cylinder (42) which forms the compression chamber (45) and a piston (51) which eccentrically rotates inside the cylinder (42).
